# EUROPÄISCHE PATENTSCHRIFT

(11) **EP 0 736 069 B1**
(45) Veröffentlichungstag und Bekanntmachung des Hinweises auf die Patenterteilung: **24.09.1997**
(21) Anmeldenummer: 95904452.0
(22) Anmeldetag: 10.12.1994
(51) Int. Cl.: C09B 23/04

(54) **PYRIDONFARBSTOFFE**
PYRIDONE DYES
COLORANTS DE LA PYRIDONE

(30) Priorität: 23.12.1993 DE 4344116
(43) Veröffentlichungstag der Anmeldung: 09.10.1996
(73) Patentinhaber: BASF AKTIENGESELLSCHAFT, 67056 Ludwigshafen (DE)
(72) Erfinder: SENS, Ruediger, D-68165 Mannheim (DE); ETZBACH, Karl-Heinz, D-67227 Frankenthal (DE); BACH, Volker, D-67434 Neustadt (DE)
(86) Internationale Anmeldenummer: EP9404114
(87) Internationale Veröffentlichungsnummer: WO9517470

(56) Entgegenhaltungen:
- EP-A- 0 416 434
- WO-A-92/19684
- JP-A- 6 143 838

## Beschreibung

Die vorliegende Erfindung betrifft neue Pyridonfarbstoffe der Formel I 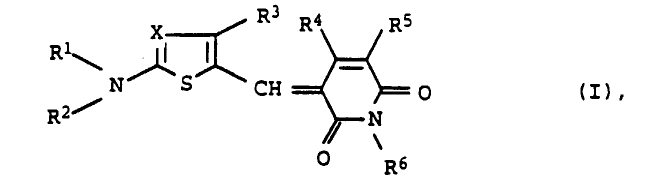 in der
- X: Stickstoff oder C-CN,
- R¹ und R²: gleich oder verschieden sind und unabhängig voneinander jeweils C₁-C₁₀-Alkyl, das gegebenenfalls durch C₁-C₄-Alkoxycarbonyl, C₁-C₄-Alkoxycarbonyloxy oder Phenyl substituiert ist und durch 1 bis 4 Sauerstoffatome in Etherfunktion unterbrochen sein kann, C₅-C₇-Cycloalkyl, C₃-C₄-Alkenyl, gegebenenfalls durch C₁-C₄-Alkyl, C₁-C₄-Alkoxy oder Halogen substituiertes Phenyl oder R¹ und R² zusammen mit dem sie verbindenden Stickstoffatom einen 5- oder 6-gliedrigen gesättigten heterocyclischen Rest, der weitere Heteroatome aufweisen kann,
- R³: Wasserstoff, C₁-C₁₀-Alkyl, C₅-C₇-Cycloalkyl, Benzyl, gegebenenfalls durch C₁-C₄-Alkyl, C₁-C₄-Alkoxy oder Halogen substituiertes Phenyl, Furanyl oder Thienyl, wobei die letzten beiden Reste durch C₁-C₄-Alkyl oder Halogen substituiert sein konnen,
- R⁴: Wasserstoff, C₁-C₄-Alkyl oder gegebenenfalls durch C₁-C₄-Alkyl, C₁-C₄-Alkoxy oder Halogen substituiertes Phenyl,
- R⁵: Cyano, Carbamoyl, C₁-C₈-Mono- oder Dialkylcarbamoyl, Carboxyl, C₁-C8-Alkoxycarbonyl oder Benzimidazolyl und
- R⁶: C₁-C₁₀-Alkyl, das gegebenenfalls durch Phenyl, Phenoxy, Cyclohexyloxy oder Pyrazolyl substituiert ist und durch 1 bis 4 Sauerstoffatome in Etherfunktion unterbrochen sein kann, C₅-C₇-Cycloalkyl oder gegebenenfalls durch C₁-C₄-Alkyl, C₁-C₄-Alkoxy oder Halogen substituiertes Phenyl bedeuten, mit der Maßgabe, daß wenn die Reste R¹ und R² jeweils C₁-C₁₀-Alkyl bedeuten oder wenn einer der Reste R¹ und R² C₁-C₁₀-Alkyl und der andere C₅-C₇-Cycloalkyl bedeutet, die Summe der in den beiden Resten R¹ und R² vorhandenen Kohlenstoffatome mindestens 7 beträgt,sowie ein Verfahren zum Färben oder Bedrucken von textilen Materialien.

Aus der US-A-5 079 365 sind Thiazolmethinpyridonfarbstoffe (ein-schließlich der oben ausgenommenen Farbstoffe) bekannt. Dort werden die Farbstoffe zur Übertragung von einem Träger auf ein mit Kunststoff beschichtetes Papier durch Diffusion mittels einer Energiequelle verwendet. Ein Hinweis, daß sich diese Farbstoffe auch zum Färben oder Bedrucken von textilen Materialien eignen würden, ist dort nicht gegeben.

Aufgabe der vorliegenden Erfindung war es, neue Methinfarbstoffe bereitzustellen, die sich vorteilhaft zur Anwendung im textilen Bereich eignen. Die neuen Farbstoffe sollten über gute Thermofixierechtheit (Trockenhitzefixierechtheit) sowie hohe Brillanz verfügen.

Demgemäß wurden die eingangs näher bezeichneten Pyridonfarbstoffe der Formel I gefunden.

Alle in der obengenannten Formel I auftretenden Alkyl- und Alkenylgruppen können sowohl geradkettig als auch verzweigt sein.

Wenn in der obengenannten Formel I substituierte Alkylgruppen auftreten, so weisen sie in der Regel 1 oder 2 Substituenten auf.

Wenn in der obengenannten Formel I substituierte Phenyl-, Furanyl- oder Thienylgruppen auftreten, so weisen sie in der Regel 1 bis 3, vorzugsweise 1 oder 2, Substituenten auf.

Reste R¹, R², R³, R⁴ und R⁶ sind z.B. Methyl, Ethyl, Propyl, Isopropyl, Butyl, Isobutyl, sec-Butyl, Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,3-, 2,4- oder 2,6-Dimethylphenyl, 2-, 3- oder 4-Methoxyphenyl, 2-, 3- oder 4-Ethoxyphenyl, 2,3-, 2,4- oder 2,6-Dimethoxyphenyl, 2-, 3- oder 4-Fluorphenyl, 2-, 3- oder 4-Chlorphenyl oder 2-, 3- oder 4-Bromphenyl.

Reste R¹, R², R³ und R⁶ sind weiterhin z.B. Pentyl, Isopentyl, Neopentyl, tert-Pentyl, Hexyl, 2-Methylpentyl, Heptyl, Octyl, 2-Ethylhexyl, Nonyl, Decyl, Cyclopentyl, Cyclohexyl oder Cycloheptyl.

Reste R¹, R² und R⁶ sind weiterhin z.B. Benzyl, 1- oder 2-Phenylethyl, 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 2- oder 4-Butoxybutyl, 3,6-Dioxaheptyl, 3,6-Dioxaoctyl, 4,8-Dioxanonyl, 3,7-Dioxaoctyl, 3,7-Dioxanonyl, 4,7, Dioxaoctyl, 4,7-Dioxanonyl, 4,8-Dioxadecyl, 1,6,8-Trioxadecyl, 3,6 9-Trioxaundecyl, 3,6,9,12-Tetraoxatridecyl oder 3,6,9,12-Tetraoxatetradecyl.

Reste R¹ und R² sind weiterhin z.B. 2-Methoxycarbonylethyl, 2-Ethoxycarbonylethyl, 2-Propoxycarbonylethyl, 2-Isopropoxycarbonylethyl, 2-Butoxycarbonylethyl, 2- oder 3-Methoxycarbonylpropyl, 2- oder 3-Ethoxycarbonylpropyl, 2- oder 3-Propoxycarbonylpropyl, 2- oder 3-Butoxycarbonylpropyl, 2- oder 4-Methoxycarbonylbutyl, 2- oder 4-Ethoxycarbonylbutyl, 2- oder 4-Propoxycarbonylbutyl, 2- oder 4-Butoxycarbonylbutyl, 2-Methoxycarbonyloxyethyl, 2-Ethoxycarbonyloxyethyl , 2-Propoxycarbonyloxyethyl, 2-Isopropoxycarbonyloxyethyl, 2-Butoxycarbonyloxyethyl, 2- oder 3-Methoxycarbonyloxypropyl, 2- oder 3-Ethoxycarbonyloxypropyl, 2- oder 3-Propoxycarbonyloxypropyl, 2- oder 3-Butoxycarbonyloxypropyl, 2- oder 4-Methoxycarbonyloxybutyl, 2- oder 4-Ethoxycarbonyloxybutyl, 2- oder 4-Propoxycarbonyloxybutyl, 2- oder 4-Butoxycarbonyloxybutyl, Prop-1-en-3-yl, But-2-en-4-yl oder 2-Methylprop-1-en-3-yl.

Reste R⁶ sind weiterhin z.B. 2-Benzyloxyethyl, 2-(Pyrazol-1-yl)ethyl, 2- oder 3-Benzyloxypropyl, 2- oder 3-(Pyrazol-1-yl)propyl, 2- oder 4-Benzyloxybutyl, 2- oder 4-(Pyrazol-1-yl)butyl, 2-Phenoxyethyl, 2- oder 3-Phenoxypropyl,2- oder 4-Phenoxybutyl, 2-Cyclohexyloxyethyl, 2- oder 3-Cyclohexyloxypropyl oder 2- oder 4-Cyclohexyloxybutyl.

Reste R³ sind weiterhin z.B. Furan-2-yl, Furan-3-yl, 3- oder 4-Methylfuran-2-yl, 3- oder 4-Chlorfuran-2-yl, Thien-2-yl, Thien-3-yl, 3- oder 4-Methylthien-2-yl oder 3- oder 4-Chlorthien-2-yl.

Reste R⁵ sind z.B. Methoxycarbonyl, Ethoxycarbonyl, Propoxycarbonyl, Isopropoxycarbonyl, Butoxycarbonyl, Pentyloxycarbonyl, Hexyloxycarbonyl, Heptyloxycarbonyl, Octyloxycarbonyl, 2-Ethylhexyloxycarbonyl, Mono- oder Dimethylcarbamoyl, Mono- oder Diethylcarbamoyl, Mono- oder Dipropylcarbamoyl, Mono- oder Dibutylcarbamoyl, Mono- oder Dipentylcarbamoyl, Mono- oder Dihexylcarbamoyl, Mono- oder Diheptylcarbamoyl, Mono- oder Dioctylcarbamoyl, Mono- oder Bis(2-ethylhexyl)carbamoyl oder N-Methyl-N-ethylcarbamoyl.

Wenn die Reste R¹ und R² zusammen mit dem sie verbindenden Stickstoffatom einen 5- oder 6-gliedrigen gesättigten heterocyclischen Rest, der weitere Heteroatome aufweisen kann, bedeuten, so können dafür beispielsweise Pyrrolidinyl, Piperidinyl, Morpholinyl, Thiomorpholinyl, Thiomorpholinyl-S,S-dioxid, Piperazinyl oder N-(C₁-C₄-Alkyl)piperazinyl in Betracht kommen.

Wenn die Reste R¹ und R² in Formel I jeweils C₁-C₁₀-Alkyl bedeuten oder wenn einer der Reste R¹ und R² C₁-C₁₀-Alkyl und der andere C₅-C₇-Cycloalkyl bedeutet, so sind solche Farbstoffe bevorzugt, in denen die Summe der in den beiden Resten R¹ und R² vorhandenen Kohlenstoffatome mindestens 8 beträgt.

Weiterhin bevorzugt sind Pyridonfarbstoffe der Formel I, in der X Stickstoff bedeutet.

Weiterhin bevorzugt sind Pyridonfarbstoffe der Formel I, in der R⁴ Methyl bedeutet.

Weiterhin bevorzugt sind Pyridonfarbstoffe der Formel I, in der R⁵ Cyano bedeutet.

Weiterhin bevorzugt sind Pyridonfarbstoffe der Formel I, in der R³ gegebenenfalls durch C₁-C₄-Alkyl, C₁-C₄-Alkoxy oder Halogen substituertes Phenyl oder Thienyl bedeutet.

Weiterhin bevorzugt sind Pyridonfarbstoffe der Formel I, in der R⁶ C₁-C₈-Alkyl, Cyclopentyl, Cyclohexyl oder gegebenenfalls durch C₁-C₄-Alkyl oder C₁-C₄-Alkoxy substituiertes Phenyl bedeutet.

Weiterhin bevorzugt sind Pyridonfarbstoffe der Formel I, in der R¹ und R² unabhängig von einander jeweils C₁-C₈-Alkyl, das gegebenenfalls durch C₁-C₄-Alkoxy, C₁-C₄-Alkoxycarbonyl oder Phenyl substituiert ist, Cyclopentyl, Cyclohexyl oder Prop-1-en-3-yl bedeuten.

Besonders bevorzugt sind Pyridonfarbstoffe der Formel I, in der R³ Phenyl oder Thienyl bedeutet.

Weiterhin besonders bevorzugt sind Pyridonfarbstoffe der Formel I, in der R⁶ C₄-C₈-Alkyl oder Cyclohexyl bedeutet.

Weiterhin besonders bevorzugt sind Pyridonfarbstoffe der Formel I, in der R¹ und R² unabhängig voneinander jeweils C₄-C₈-Alkyl, C₁-C₄-Alkoxy-C₂-C₄-alkyl, C₁-C₄-Alkoxycarbonyl-C₂-C₄-alkyl, Benzyl oder Prop-1-en-3-yl bedeuten oder in der einer der beiden Reste R¹ und R² C₁-C₄-Alkyl und der andere Cyclohexyl bedeutet.

Ganz besonders bevorzugt sind Pyridonfarbstoffe der Formel I, in der R¹ und R² unabhangig voneinander C₄-C₈-Alkyl, Benzyl oder Prop-1-en-3-yl bedeuten.

Die erfindungsgemäßen Pyridonfarbstoffe der Formel I können nach an sich bekannten Methoden hergestellt werden. Beispielsweise kann man einen Aldehyd der Formel II 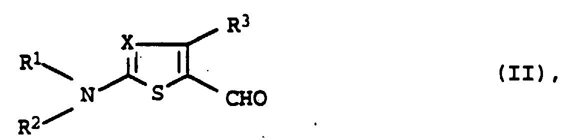 in der X, R¹, R² und R³ jeweils die obengenannte Bedeutung besitzen, mit einem Pyridon der Formel III 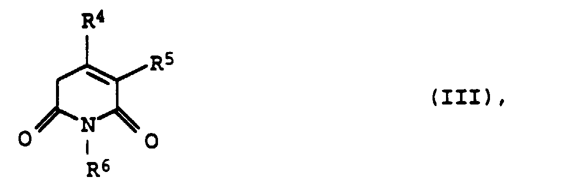 in der R⁴, R⁵ und R⁶ jeweils die obengenannte Bedeutung besitzen, kondensieren.

Ein weiterer Gegenstand der vorliegenden Erfindung ist ein Verfahren zum Färben oder Bedrucken von textilen Materialien, daß dadurch gekennzeichnet ist, daß man Pyridonfarbstoffe der oben genannten Formel I verwendet.

Wenn die Reste R¹ und R² in Formel I jeweils C₁-C₁₀-Alkyl bedeuten oder wenn einer der Reste R¹ und R² C₁-C₁₀-Alkyl und der andere C₅-C₇-Cycloalkyl bedeutet, so ist ein Verfahren bevorzugt, in dem Farbstoffe verwendet werden, in denen die Summe der in den beiden Resten R¹ und R² vorhandenen Kohlenstoffatome vorzugsweise mindestens 8 beträgt.

Weiterhin bevorzugt ist ein Verfahren, in dem Pyridonfarbstoffe der Formel I, in der X Stickstoff bedeutet, verwendet werden.

Weiterhin bevorzugt ist ein Verfahren, in dem Pyridonfarbstoffe der Formel I, in der R⁴ Methyl bedeutet, verwendet werden.

Weiterhin bevorzugt ist ein Verfahren, in dem Pyridonfarbstoffe der Formel I, in der R⁵ Cyano bedeutet, verwendet werden.

Weiterhin bevorzugt ist ein Verfahren, in dem Pyridonfarbstoffe der Formel I, in der R³ gegebenenfalls durch C₁-C₄-Alkyl, C₁-C₄-Alkoxy oder Halogen substituertes Phenyl oder Thienyl bedeutet, verwendet werden.

Weiterhin bevorzugt ist ein Verfahren, in dem Pyridonfarbstoffe der Formel I, in der R⁶ C₁-C₈-Alkyl, Cyclopentyl, Cyclohexyl oder gegebenenfalls durch C₁-C₄-Alkyl oder C₁-C₄-Alkoxy substituiertes Phenyl bedeutet, verwendet werden.

Weiterhin bevorzugt ist ein Verfahren, in dem Pyridonfarbstoffe der Formel I, in der R¹ und R² unabhängig voneinander jeweils C₁-C₈-Alkyl, das gegebenenfalls durch C₁-C₄-Alkoxy, C₁-C₄-Alkoxycarbonyl oder Phenyl substituiert ist, Cyclopentyl, Cyclohexyl oder Prop-1-en-3-yl bedeuten, verwendet werden.

Besonders bevorzugt ist ein Verfahren, in dem Pyridonfarbstoffe der Formel I, in der R³ Phenyl oder Thienyl bedeutet, verwendet werden.

Weiterhin besonders bevorzugt ist ein Verfahren, in dem Pyridonfarbstoffe der Formel I, in der R⁶ C₄-C₈-Alkyl oder Cyclohexyl bedeutet, verwendet werden.

Weiterhin besonders bevorzugt ist ein Verfahren, in dem Pyridonfarbstoffe der Formel I, in der R¹ und R² unabhängig voneinander jeweils C₄-C₈-Alkyl, C₁-C₄-Alkoxy-C₂-C₄-alkyl, C₁-C₄-Alkoxycarbonyl-C₂-C₄-alkyl, Benzyl oder Prop-1-en-3-yl, oder in der einer der beiden Reste R¹ und R² C₁-C₄-Alkyl und der andere Cyclohexyl bedeutet, verwendet werden.

Ganz besonders bevorzugt ist ein Verfahren, in dem Pyridonfarbstoffe der Formel I, in der R¹ und R² unabhängig voneinander C₄-C₈-Alkyl, Benzyl oder Prop-1-en-3-yl bedeuten, verwendet werden.

Erfindungsgemäß sind unter textilen Materialien Fasern, Garne, Zwirne, Maschenware oder Non-wovens aus Polyester, modifiziertem Polyester, z.B. anionisch modifiziertem Polyester, oder Mischgewebe von Polyestern mit Wolle oder Cellulosederivaten, wie Baumwolle oder Viskose, zu verstehen. Die Färbe- und Druckbedingungen sind an sich bekannt. Nähere Einzelheiten können auch den Beispielen entnommen werden.

Die neuen Pyridonfarbstoffe können als Farbstoffzubereitungen zur Anwendung gelangen. Solche Farbstoffmischungen enthalten in der Regel 10 bis 60 Gew.-%, bezogen auf das Gewicht der Farbstoffzubereitung, eines oder mehrerer der eingangs näher bezeichneten Pyridonfarbstoffe sowie 40 bis 90 Gew.-%, bezogen auf das Gewicht der Farbstoffpräparation, Dispergiermittel, weitere Hilfsmittel und/oder Wasser.

Mit den neuen Pyridonfarbstoffen der Formel I erhält man sehr brillante Färbungen in blaustichig roten Tönen. Die neuen Farbstoffe sind sehr farbstark und weisen eine gute Thermofixierechtheit auf.

Die folgenden Beispiele sollen die Erfindung näher erläutern.

### Beispiel 1

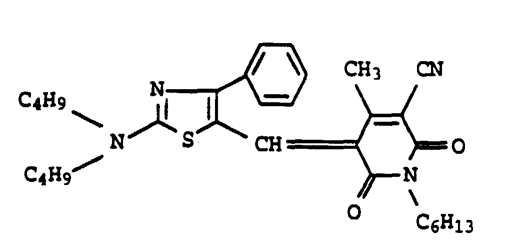

Man rührte 9,8 g 2-Dibutylamino-4-phenyl-5-formylthiazol und 7,03 g 1-Hexyl-3-cyano-4-methyl-6-hydroxypyrid-2-on in 20 ml Acetanhydrid an. Das Reaktionsgemisch wurde 10 min bei Rückflußtemperatur gehalten (138°C bis 140°C). Danach wurde abgekühlt. Bei 50°C fiel der Farbstoff aus. Um die Rührfähigkeit zu erhalten, wurden 100 ml Methanol hinzugegeben. Danach wurde bei Raumtemperatur abgesaugt, mit Methanol gewaschen und anschließend getrocknet.
Ausbeute: 76 % der Theorie; Fp.: 145°C
λₘₐₓ: 532 nm, in Tetrahydrofuran (THF)

| C₃₁H₄₀N₄O₂S (532,8) | | | | | |
|---|---|---|---|---|---|
| | C | H | N | O | S |
| ber. | 69,6 | 7,6 | 10,5 | 6,0 | 6,0 |
| gef. | 69,7 | 7,7 | 10,5 | 6,0 | 6,1 |

In analoger Weise werden die im folgenden einzeln aufgeführten Farbstoffe sowie auch die in den Tabellen 1 und 2 aufgeführten Farbstoffe erhalten.

### Beispiel 2

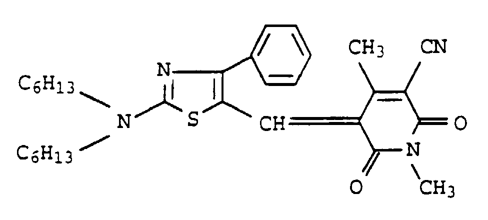

Fp: 146°C
Ausbeute: 81 % der Theorie
λₘₐₓ: 532 nm, in THF.

### Beispiel 3

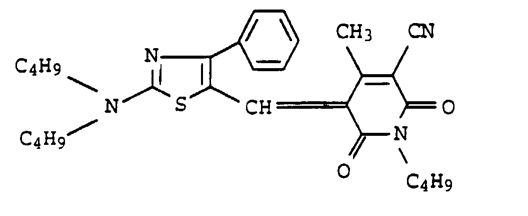

Fp: 180°C
Ausbeute: 88 % der Theorie
λₘₐₓ: 532 nm, in THF.

### Beispiel 4

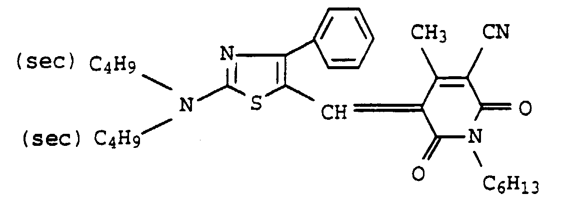

Fp: 80°C bis 85°C
Ausbeute: 76 % der Theorie
λₘₐₓ: 532 nm, in THF.

### Beispiel 5

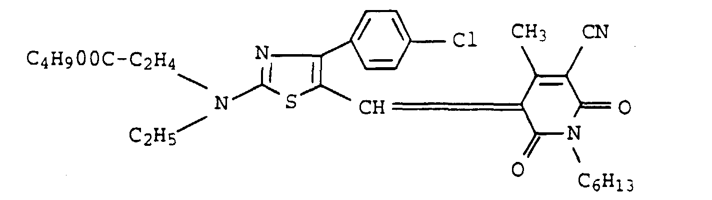

Fp: 121°C
Ausbeute: 50 % der Theorie
λₘₐₓ: 529 nm, in THF.

### Beispiel 6

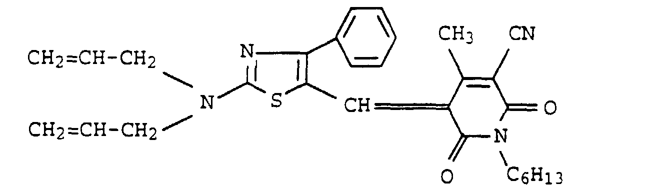

Fp: 157°C
Ausbeute: 70,4 % der Theorie
λₘₐₓ: 527 nm, in THF.

### Beispiel 7

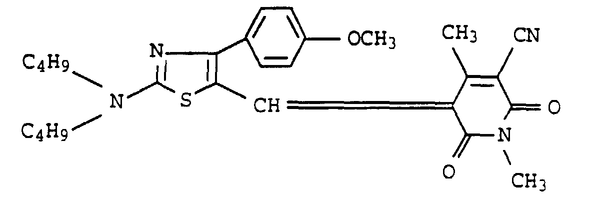

Fp: 180°C
Ausbeute: 82,5 % der Theorie
λₘₐₓ: 537 nm, in THF.

### Beispiel 8

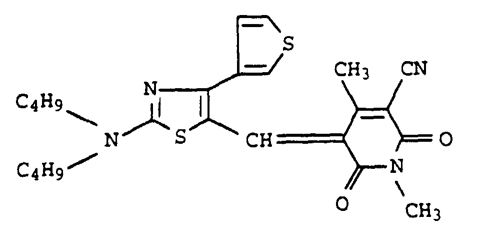

Fp: 203°C
Ausbeute: 89 % der Theorie
λₘₐₓ: 537 nm, in THF.

### Beispiel 9

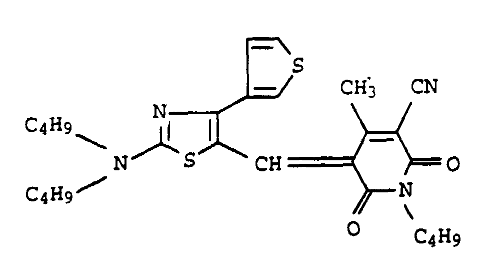

Fp: 174°C
Ausbeute: 88 % der Theorie
λₘₐₓ: 537 nm, in THF.

### Beispiel 10

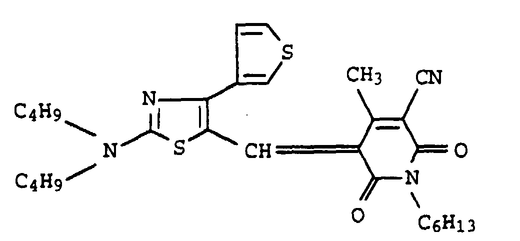

Fp: 149°C
Ausbeute: 74 % der Theorie
λₘₐₓ: 537 nm, in THF.

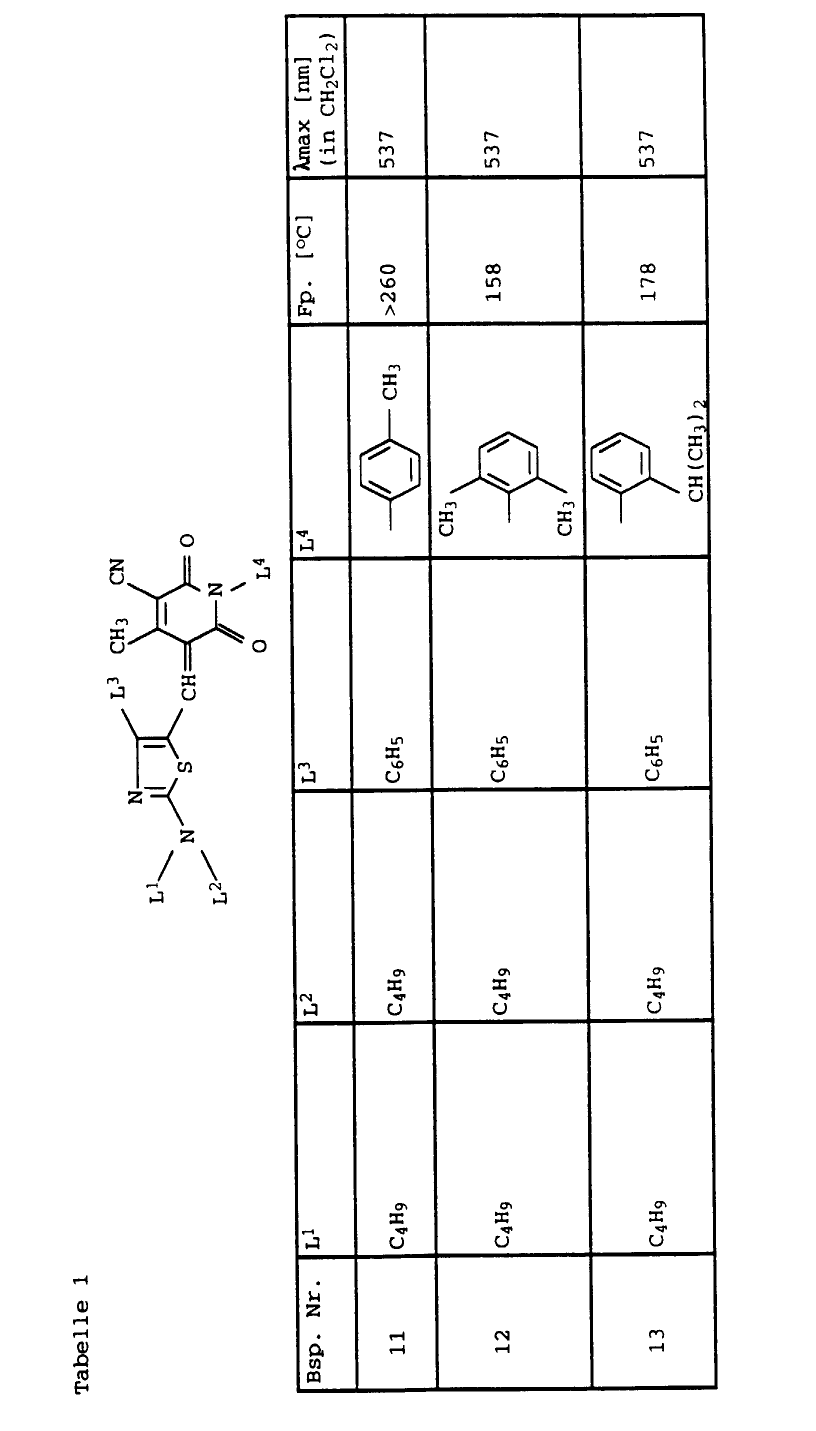

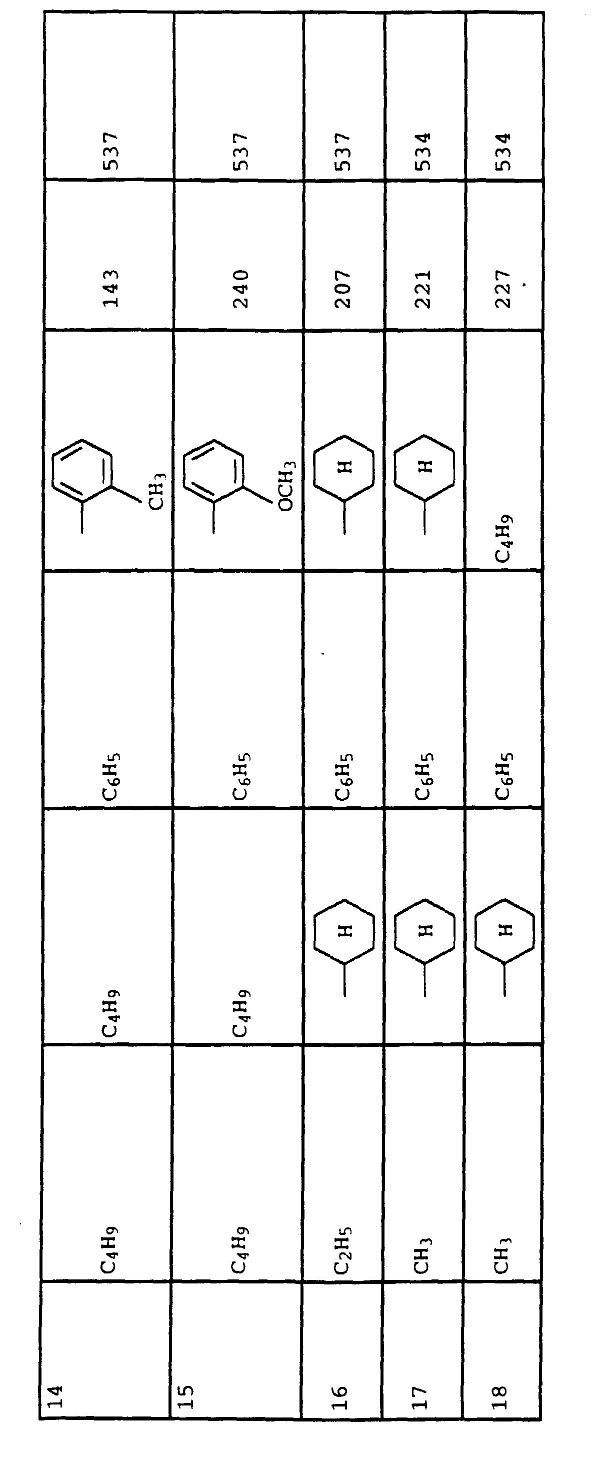

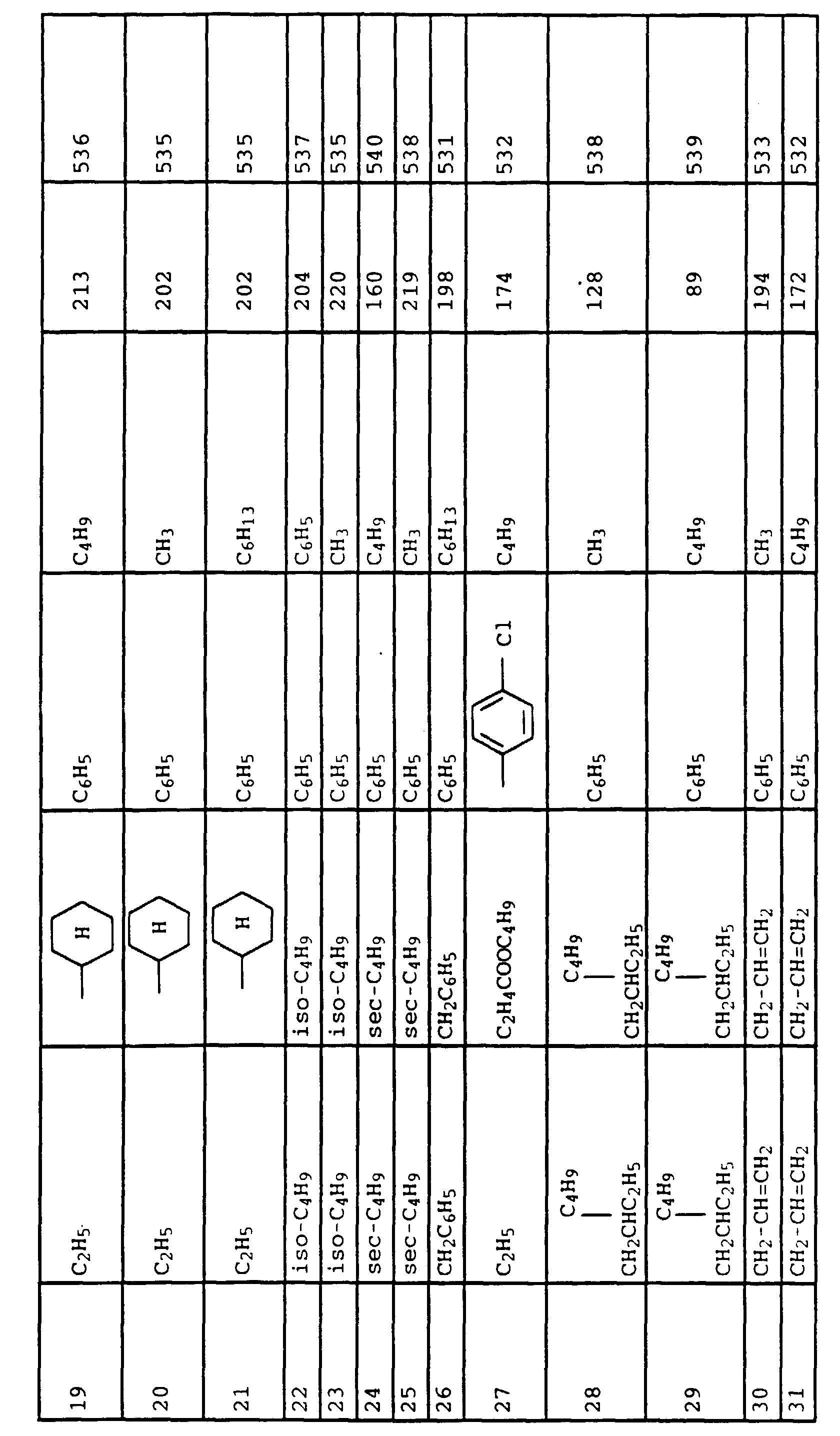

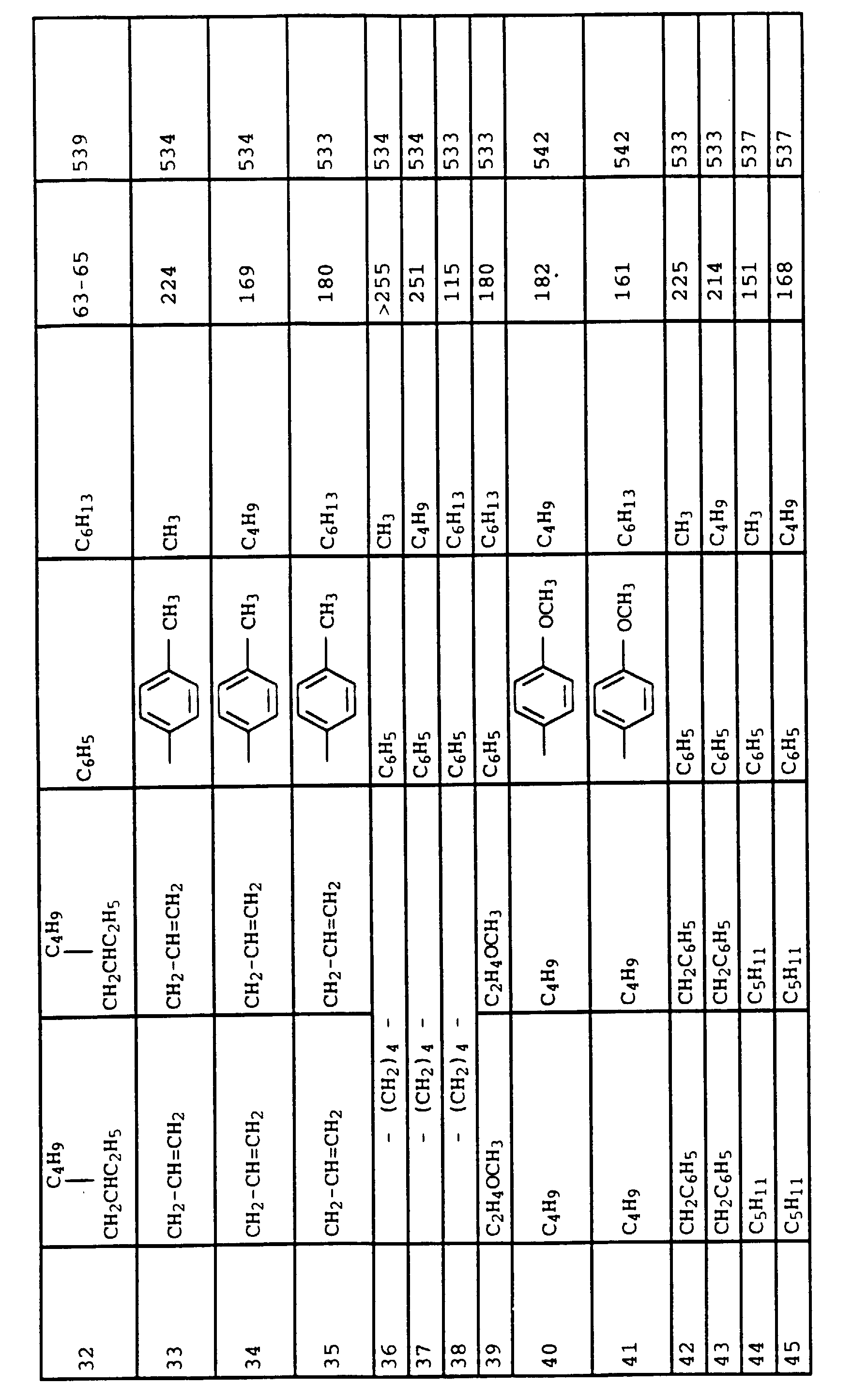

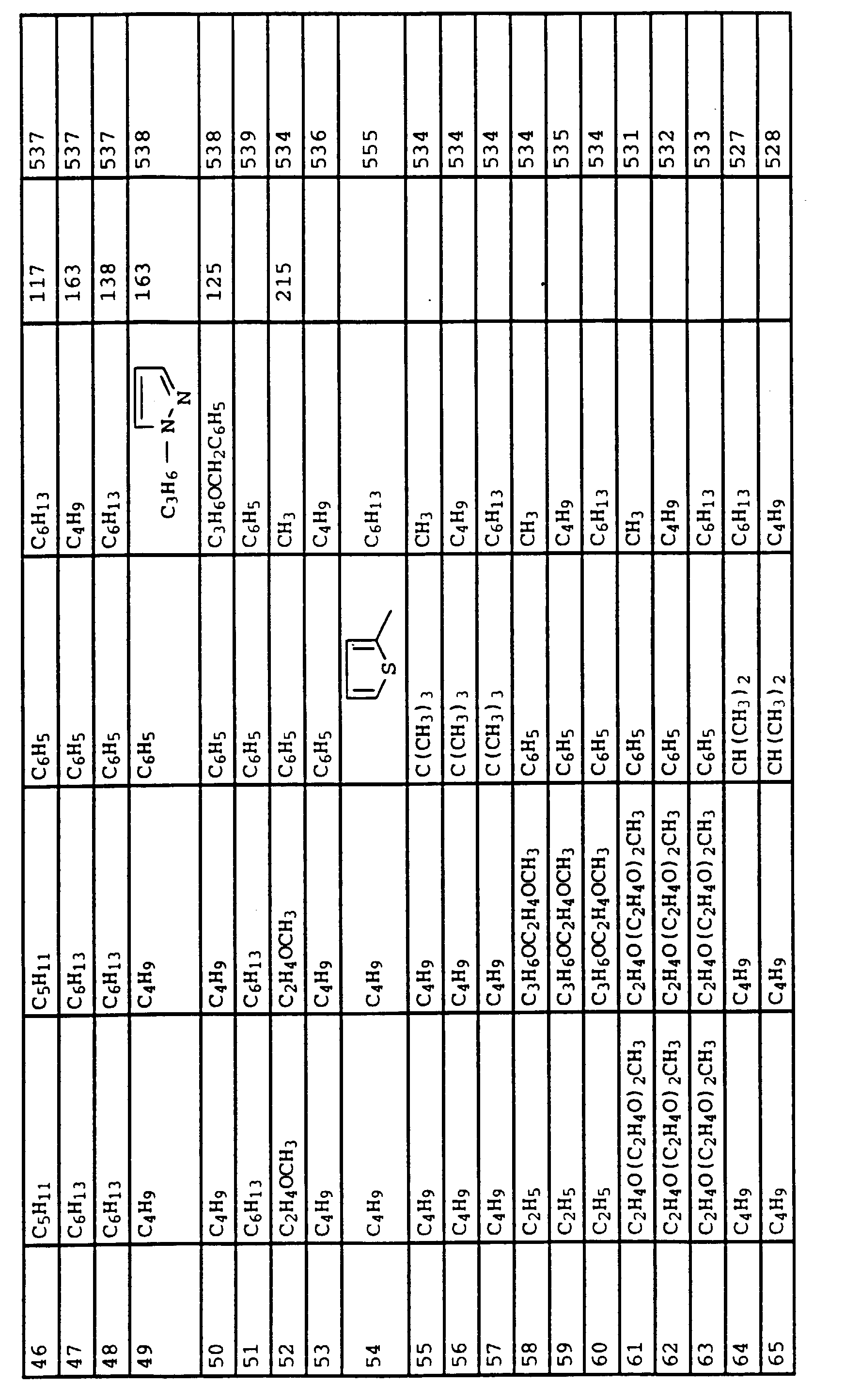

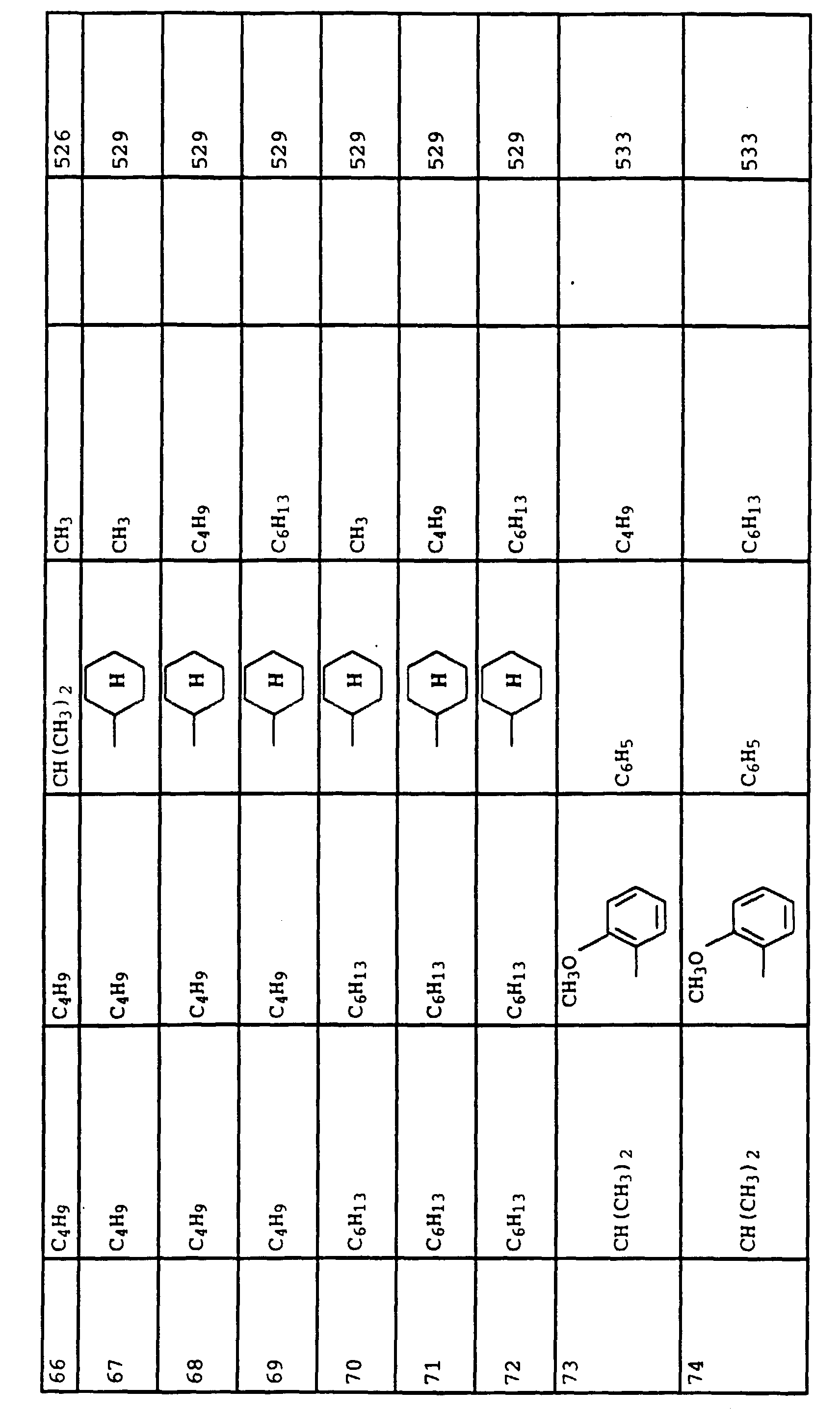

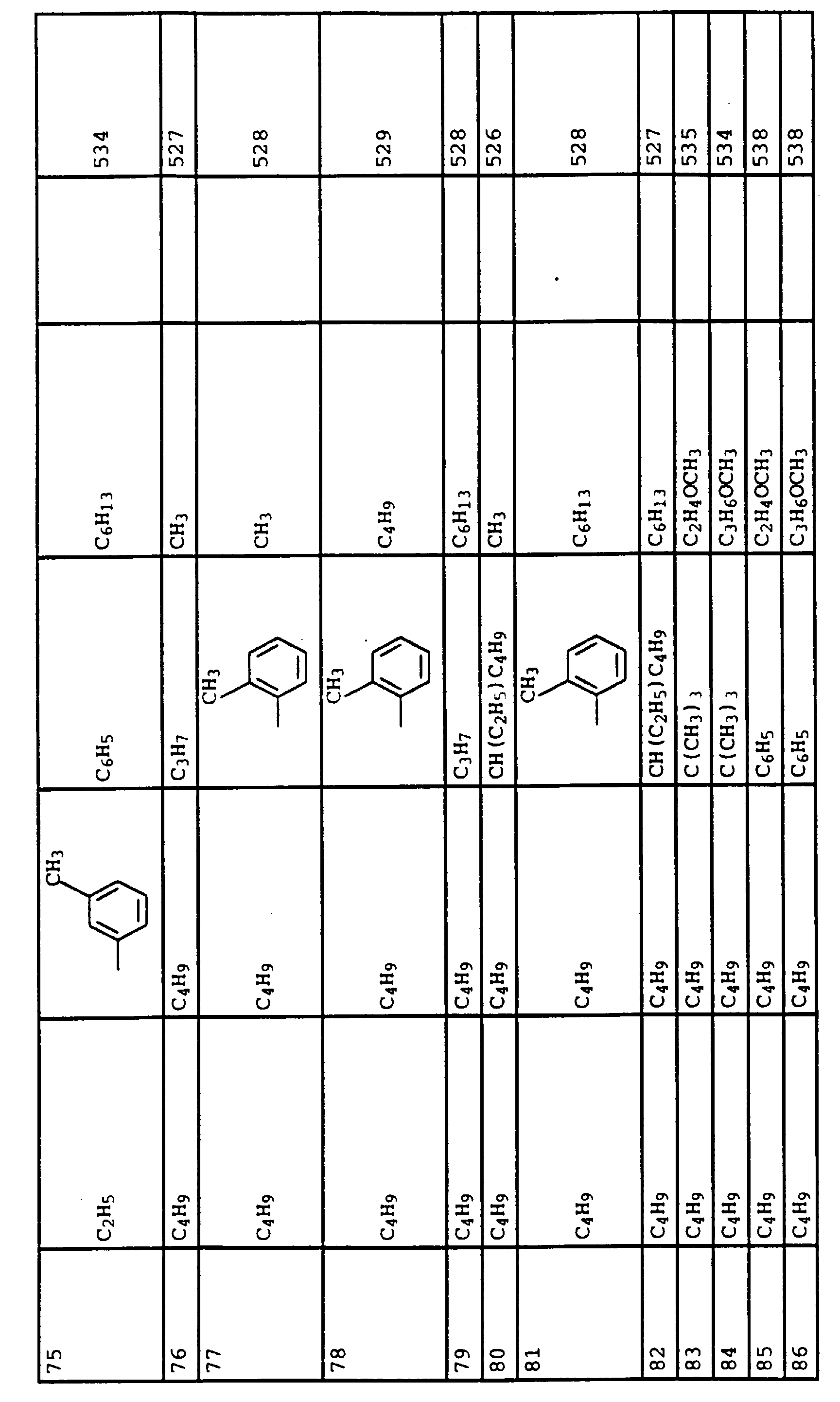

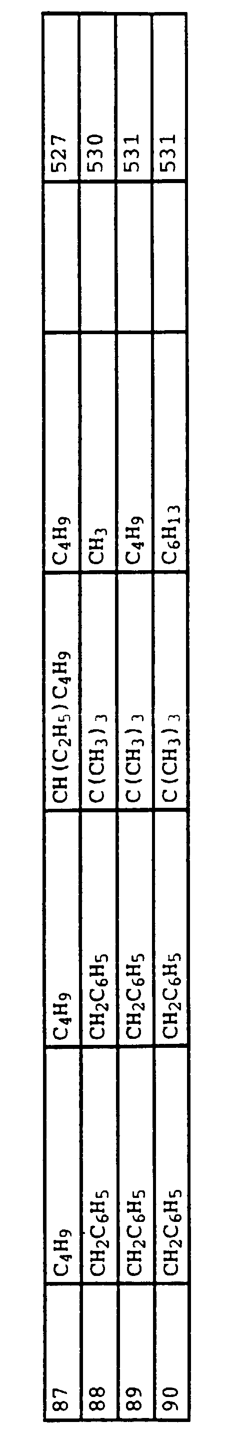

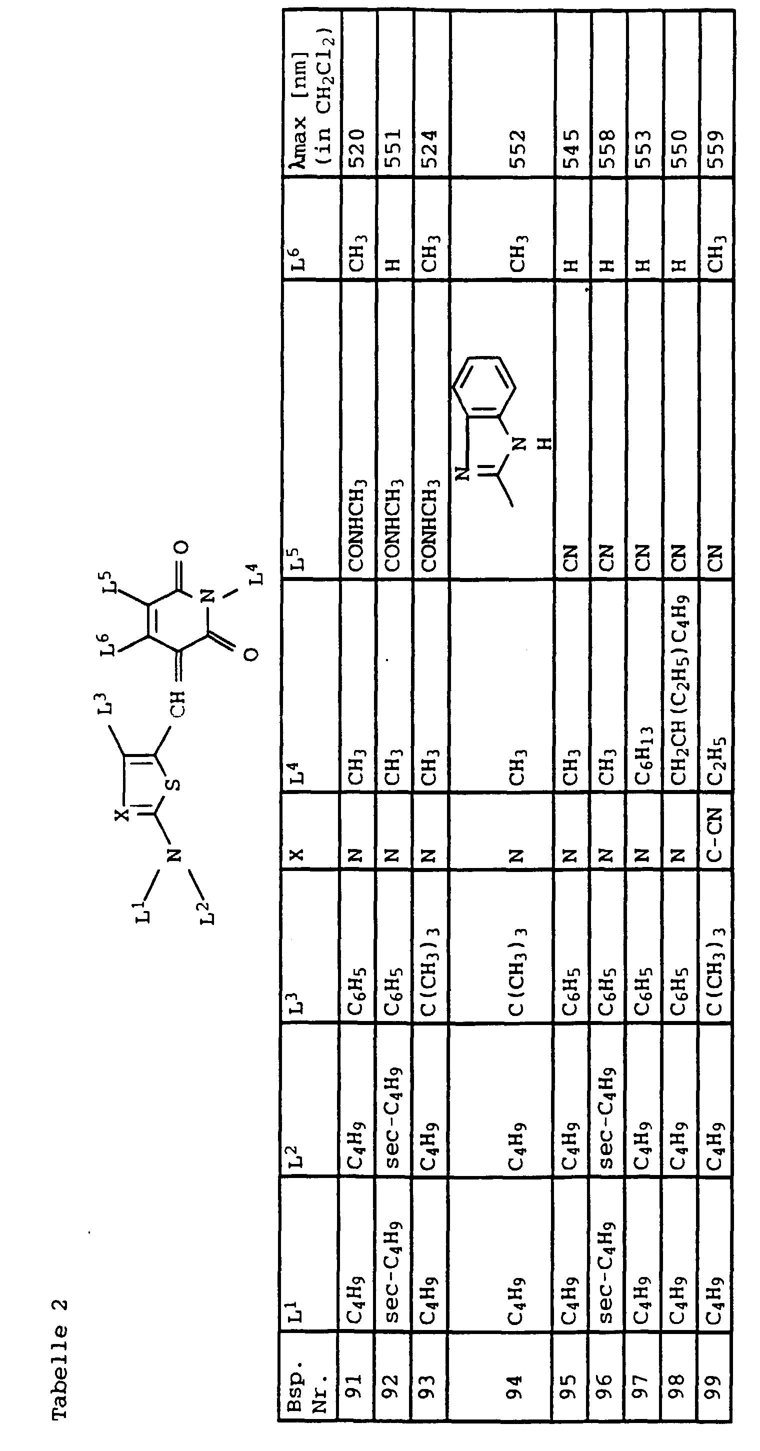

### Färbevorschrift

5 g Polyestergewebe (PES) werden bei einer Temperatur von 50°C in 100 ml einer Färbeflotte gegeben, die einen im folgenden näher bezeichneten Farbstoff enthält und deren pH-Wert mittels Essigsäure/Natriumacetat auf 4,5 eingestellt ist. Man behandelt 5 Minuten bei 50°C, steigert dann die Temperatur der Flotte auf 130°C, hält 45 Minuten bei dieser Temperatur und läßt dann innerhalb von 20 Minuten auf 70°C abkühlen.

Danach wird das ausgefärbte Polyestergewebe reduktiv gereinigt, indem man es 15 Minuten in 200 ml Flotte, die 5 ml/l 32 gew.-%ige Natronlauge, 3 g/l Natriumdithionit und 1 g/l eines Anlagerungsproduktes von 48 mol Ethylenoxid an 1 mol Ricinusöl enthält, bei 70°C behandelt. Schließlich wird das Gewebe gespült, mit verdünnter Essigsäure neutralisiert, nochmals gespült und getrocknet.

Die Farbstoffe der Beispiele 1 bis 10 und 19 wurden nach der obigen Färbevorschrift ausgefärbt. Man erhielt sehr farbstarke Färbungen in brillanten blaustichig roten Farbtönen.

## Patentansprüche

1. Pyridonfarbstoffe der Formel I 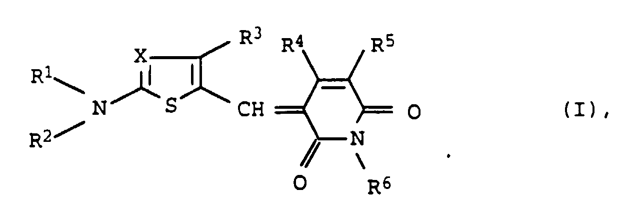 in der
X Stickstoff oder C-CN,
R¹ und R² gleich oder verschieden sind und unabhängig voneinander jeweils C₁-C₁₀-Alkyl, das gegebenenfalls durch C₁-C₄-Alkoxycarbonyl, C₁-C₄-Alkoxycarbonyloxy oder Phenyl substituiert ist und durch 1 bis 4 Sauerstoffatome in Etherfunktion unterbrochen sein kann, C₅-C₇-Cycloalkyl, C₃-C₄-Alkenyl, gegebenenfalls durch C₁-C₄-Alkyl, C₁-C₄-Alkoxy oder Halogen substituiertes Phenyl oder R¹ und R² zusammen mit dem sie verbindenden Stickstoffatom einen 5- oder 6-gliedrigen gesättigten heterocyclischen Rest, der weitere Heteroatome aufweisen kann,
R³ Wasserstoff, C₁-C₁₀-Alkyl, C₅-C₇-Cycloalkyl, Benzyl, gegebenenfalls durch C₁-C₄-Alkyl, C₁-C₄-Alkoxy oder Halogen substituiertes Phenyl, Furanyl oder Thienyl, wobei die letzten beiden Reste durch C₁-C₄-Alkyl oder Halogen substituiert sein können,
R⁴ Wasserstoff, C₁-C₄-Alkyl oder gegebenenfalls durch C₁-C₄-Alkyl, C₁-C₄-Alkoxy oder Halogen substituiertes Phenyl,
R⁵ Cyano, Carbamoyl, C₁-C₈-Mono- oder Dialkylcarbamoyl, Carboxyl, C₁-C₈-Alkoxycarbonyl oder Benzimidazolyl und
R⁶ C₁-C₁₀-Alkyl, das gegebenenfalls durch Phenyl, Phenoxy, Cyclohexyloxy oder Pyrazolyl substituiert ist und durch 1 bis 4 Sauerstoffatome in Etherfunktion unterbrochen sein kann, C₅-C₇-Cycloalkyl oder gegebenenfalls durch C₁-C₄-Alkyl, C₁-C₄-Alkoxy oder Halogen substituiertes Phenyl bedeuten,
mit der Maßgabe, daß wenn die Reste R¹ und R² jeweils C₁-C₁₀-Alkyl bedeuten oder wenn einer der Reste R¹ und R² C₁-₁₀-Alkyl und der andere C₅-C₇-Cycloalkyl bedeutet, die Summe der in den beiden Resten R¹ und R² vorhandenen Kohlenstoffatome mindestens 7 beträgt.

2. Pyridonfarbstoffe nach Anspruch 1, dadurch gekennzeichnet, daß X Stickstoff bedeutet.

3. Pyridonfarbstoffe nach Anspruch 1, dadurch gekennzeichnet, daß R⁴ Methyl bedeutet.

4. Pyridonfarbstoffe nach Anspruch 1, dadurch gekennzeichnet, daß R³ gegebenenfalls durch C₁-C₄-Alkyl, C₁-C₄-Alkoxy oder Halogen substituiertes Phenyl oder Thienyl bedeutet.

5. Pyridonfarbstoffe nach Anspruch 1, dadurch gekennzeichnet, daß R⁶ C₁-C₈-Alkyl, Cyclopentyl, Cyclohexyl oder gegebenenfalls durch C₁-C₄-Alkyl oder C₁-C₄-Alkoxy substituiertes Phenyl bedeutet.

6. Verfahren zum Färben oder Bedrucken von textilen Materialien, dadurch gekennzeichnet, daß man Pyridonfarbstoffe gemäß Anspruch 1 verwendet.

## Claims

1. Pyridone dyes of the formula I 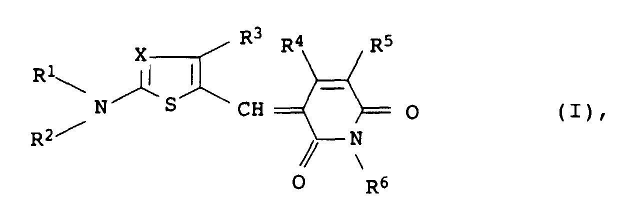 where
X is nitrogen or C-CN,
R¹ and R² are identical or different and each is independently of the other unsubstituted or C₁-C₄-alkoxycarbonyl-, C₁-C₄-alkoxycarbonyloxy- or phenyl-substituted C₁-C₁₀-alkyl with or without interruption by from 1 to 4 oxygen atoms in ether function, C₅-C₇-cycloalkyl, C₃-C₄-alkenyl, unsubstituted or C₁-C₄-alkyl-, C₁-C₄-alkoxy- or halogen-substituted phenyl, or R¹ and R² are together with the nitrogen atom joining them together a 5- or 6-membered saturated heterocyclic radical with or without further hetero atoms,
R³ is hydrogen, C₁-C₁₀-alkyl, C₅-C₇-cycloalkyl, benzyl, unsubstituted or C₁-C₄-alkyl-, C₁-C₄-alkoxy- or halogen-substituted phenyl, furanyl or thienyl, the last two radicals being unsubstituted or C₁-C₄-alkyl- or halogen-substituted,
R⁴ is hydrogen, C₁-C₄-alkyl or unsubstituted or C₁-C₄-alkyl-, C₁-C₄-alkoxy- or halogen-substituted phenyl,
R⁵ is cyano, carbamoyl, mono- or di(C₁-C₈-alkyl)carbamoyl, carboxyl, C₁-C₈-alkoxycarbonyl or benzimidazolyl, and
R⁶ is unsubstituted or phenyl-, phenoxy-, cyclohexyloxy- or pyrazolyl-substituted C₁-C₁₀-alkyl with or without interruption by from 1 to 4 oxygen atoms in ether function, C₅-C₇-cycloalkyl or unsubstituted or C₁-C₄-alkyl-, C₁-C₄-alkoxy- or halogen-substituted phenyl,
with the proviso that the total number of carbon atoms present in the two radicals R¹ and R² is at least 7 when R¹ and R² are each C₁-C₁₀-alkyl or when one of R¹ and R² is C₁-C₁₀-alkyl and the other is C₅-C₇-cycloalkyl.

2. Pyridone dyes as claimed in claim 1, wherein X is nitrogen.

3. Pyridone dyes as claimed in claim 1, wherein R⁴ is methyl.

4. Pyridone dyes as claimed in claim 1, wherein R³ is unsubstituted or C₁-C₄-alkyl-, C₁-C₄-alkoxy- or halogen-substituted phenyl or thienyl.

5. Pyridone dyes as claimed in claim 1, wherein R⁶ is C₁-C₈-alkyl, cyclopentyl, cyclohexyl or unsubstituted or C₁-C₄-alkyl- or C₁-C₄-alkoxy-substituted phenyl.

6. A process for dyeing or printing textile materials, which comprises using pyridone dyes as claimed in claim 1.

## Revendications

1. Colorants pyridoniques de formule I 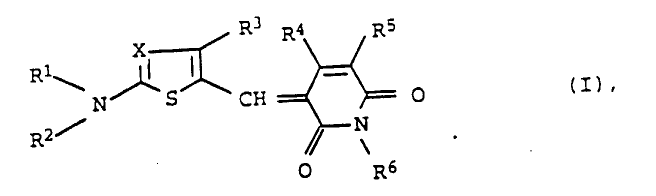 dans laquelle
X représente un atome d'azote ou C-CN,
R¹ et R² sont identiques ou différents et représentent chacun, indépendamment l'un de l'autre, un groupement alkyle en C₁-C₁₀, qui est éventuellement substitué par un groupement alcoxycarbonyle en C₁-C₄, alcoxycarbonyloxy en C₁-C₄ ou phényle et qui peut être interrompu par 1 à 4 atomes d'oxygène en fonction éther, un groupement cycloalkyle en C₅-C₇, un groupement alcényle en C₃-C₄, un groupement phényle éventuellement substitué par un groupement alkyle en C₁-C₄, alcoxy en C₁-C₄ ou par un atome d'halogène, ou bien R¹ et R² forment, avec l'atome d'azote qui les relie, un reste hétérocyclique saturé à 5 ou 6 maillons, qui peut comporter d'autres hétéroatomes,
R³ représente un atome d'hydrogène, un groupement alkyle en C₁-C₁₀, un groupement cycloalkyle en C₅-C₇, un groupement benzyle, un groupement phényle éventuellement substitué par un groupement alkyle en C₁-C₄, alcoxy en C₁-C₄ ou par un atome d'halogène, un groupement furannyle ou thiényle pouvant tous deux être substitués par un groupement alkyle en C₁-C₄ ou par un atome d'halogène,
R⁴ représente un atome d'hydrogène, un groupement alkyle en C₁-C₄ ou un groupement phényle éventuellement substitué par un groupement alkyle en C₁-C₄, alcoxy en C₁-C₄ ou par un atome d'halogène,
R⁵ représente un groupement cyano, un groupement carbamoyle, un groupement mono- ou dialkylcarbamoyle en C₁-C₈, un groupement carboxyle, un groupement alcoxycarbonyle en C₁-C₈ ou benzimidazolyle et
R⁶ représente un groupement alkyle en C₁-C₁₀, qui est éventuellement substitué par un groupement phényie, phénoxy, cyclohexyloxy ou pyrazolyle et peut être interrompu par 1 à 4 atomes d'oxygène en fonction éther, un groupement cycloalkyle en C₅-C₇ ou un groupement phényle éventuellement substitué par un groupement alkyle en C₁-C₄, alcoxy en C₁-C₄ ou par un atome d'halogène,
étant spécifié que lorsque les restes R¹ et R² représentent chacun un groupement alkyle en C₁-C₁₀ ou, lorsque l'un des restes R¹ et R² représente un groupement alkyle en C₁-C₁₀ et l'autre représente un groupement cycloalkyle en C₅-C₇, la somme des atomes de carbone des deux restes R¹ et R² s'élève au moins à 7.

2. Colorants pyridoniques selon la revendication 1, caractérisés en ce que X représente un atome d'azote.

3. Colorants pyridoniques selon la revendication 1, caractérisés en ce que R⁴ représente un groupement méthyle.

4. Colorants pyridoniques selon la revendication 1, caractérisés en ce que R³ représente un groupement thiényle ou phényle éventuellement substitué par un groupement alkyle en C₁-C₄, alcoxy en C₁-C₄ ou par un atome d'halogène.

5. Colorants pyridoniques selon la revendication 1, caractérisés en ce que R⁶ représente un groupement alkyle en C₁-C₈, cyclopentyle, cyclohexyle ou phényle éventuellement substitué par un groupement alkyle en C₁-C₄ ou alcoxy en C₁-C₄.

6. Procédé de teinture ou d'impression de matières textiles, caractérisé en ce que l'on utilise des colorants pyridoniques selon la revendication 1.
